# EUROPEAN PATENT SPECIFICATION

(11) **EP 4 347 083 B1**
(45) Date of publication and mention of the grant of the patent: **27.08.2025**
(21) Application number: 21729897.5
(22) Date of filing: 02.06.2021
(51) Int. Cl.: B01D 17/02, B01D 21/26, B04B 1/08, B01D 17/12

(54) **METHOD AND SYSTEM FOR PURIFICATION OF OIL**
VERFAHREN UND SYSTEM ZUR REINIGUNG VON ÖL
PROCÉDÉ ET SYSTÈME DE PURIFICATION D'HUILE

(43) Date of publication of application: 10.04.2024
(73) Proprietor: SKF MFR Technology AB, 12030 Stockholm (SE)
(72) Inventor: HURNASTI, Lasse, 14141 Huddinge (SE)
(74) Representative: Kohl, Thomas
(86) International application number: PCT/EP2021/064800
(87) International publication number: WO 2022/253425

(56) References cited:
- EP-A1- 3 666 387
- EP-A1- 3 782 735
- US-A- 4 151 950
- US-A1- 2008 171 645
- US-A1- 2013 029 828
- US-A1- 2018 117 601

## Description

### TECHNICAL FIELD OF THE INVENTION

The present invention relates to a method and a system for purification of oil.

### BACKGROUND OF THE INVENTION

Purification of oils, such as for example slop oil, waste oil, slurry oil, crude oil, industrial oil, petroleum products or bio-oils is important for the possibility to use/reuse oils and therefore an important factor for the environmental future and the limited nature resources of oils. Purification of slop oil (and waste oil, hereafter only referred to as slop oil) is problematic in many ways. Slop oil can comprise oil, water, particles and emulsion phase. The particles can stabilize the emulsion phase and complicate a purification process. Purification of industrial emulsions comprising water and oil, such as for example cutting fluids is also an important environmental issue.

In slop oil treatment, centrifuge systems are often used for example for separation of oil and water. Slop oils comprise different ingredients, such as different types of oils, water and particles, in different amounts. Hereby a composition of the slop oil will differ between each batch of slop oil to be purified. For example, a density and a viscosity of the oil in the slop oil will differ between different slop oils. Different types of oils may be present in the slop oil in different ratios and the different oils may have different viscosities. Hereby treatment conditions are very different for all batches of slop oil to be purified. This may be the case also for other types of oil to be purified, such as different types of industrial oils. A good purification result will not be achieved when different contaminated oils, such as different batches of slop oils are purified in the same system. An example of oil purification by means of a centrifuge is provided in US2018/117601.

### SUMMARY

An object of the present invention is to provide an improved method and system for purification of contaminated oils.

A further object of the invention is to provide a method and a system which can provide good purification results independently of the composition of contents in the contaminated oil.

This is achieved by a method and a system according to the independent claims.

Hereby the system will be specifically adapted for purification of oils with different compositions. This adaptation of the system, i.e. change of a backpressure provided to the light and/or heavy phase outlet from the centrifugal separator, is performed automatically in dependence of at least one value of the measured one or more properties. Hereby a flexible system is achieved which can be effectively used for purification of different types of contaminated oils. Usually when a disc stack centrifugal separator is used an interface between the oil and water in the disc stack is fixedly set by providing a gravity disc to a heavy phase outlet chamber (also called water paring chamber) and a level ring to a light phase outlet chamber (also called oil paring chamber) of the disc stack centrifugal separator. If the position of the interface between oil and water in the disc stack needs to be adjusted, if for example another type of oil having another density and/or viscosity is to be treated, the gravity disc and/or level ring is changed to another one having another inner diameter whereby the interface between oil and water in the disc stack will be moved. According to the invention a disc stack centrifugal separator is used comprising a heavy phase outlet chamber and/or a light phase outlet chamber in which a fluid level can be controlled. This can be achieved for example by removing a gravity disc or by providing a gravity disc with a comparatively large inner diameter. Hereby the heavy and/or light phase outlet chamber of the disc stack centrifugal separator will allow for a fluid level to be controlled to different positions. By controlling the fluid level in the heavy and/or light phase outlet chamber the position of the interface between oil and water in the disc stack will also be moved. According to the invention the fluid level in the heavy and/or light phase outlet chamber is moved by controlling a back pressure provided to the heavy and/or light phase outlet of the centrifugal separator. This is done in dependence of a value of at least one measured property of light phase retrieved from the centrifugal separator, which can be for example one or more of density, viscosity, heavy phase content in the light phase and flow rate. Hereby the back pressure is controlled in dependence of one or more of these measurements and the position of the interface between oil (light phase) and water (heavy phase) in the disc stack can be controlled in dependence of said measurements whereby the purification system can be adapted easily for different types of oil having different components. The measuring of these properties and the change of backpressure can be provided automatically continuously or at suitable intervals and hereby an automatic oil purification system is achieved which can provide good purification results for different types of for example slop oils comprising different types of oil components. In one embodiment of the invention said steps of measuring one or more properties and controlling a backpressure are performed continuously or repeatedly at predefined intervals during purification of contaminated oil. Hereby, the oil purification system **is** further comprising a control system which is provided in communication contact with the at least one light phase sensor and with the at least one pressure control device, wherein said control system is configured to control the at least one pressure control device in dependence of at least one value of the measured one or more properties. In some embodiments of the invention said control system is configured to control the at least one pressure control device such that the backpressure provided to the heavy phase outlet chamber and/or light phase outlet chamber is adjusted continuously or repeatedly at predefined intervals. Hereby the method and the system of the invention will be repeatedly or continuously optimized for different conditions. If for example a composition of different types of oils in the contaminated oil to be purified is changing the system can be automatically adjusted for this immediately. Hereby a flexible and effective method and system for purification of oil is achieved.

In one embodiment of the invention the method further comprises the step of measuring one or more properties in the heavy phase retrieved from the heavy phase outlet of the disc stack centrifugal separator, wherein said one or more properties comprise one or more of a density and a flow rate of the heavy phase. Hereby, in this embodiment the oil purification system further comprises at least one heavy phase sensor positioned in the oil purification system for measuring one or more properties in the heavy phase retrieved from the heavy phase outlet of the disc stack centrifugal separator, wherein said one or more properties comprise one or more of a density and a flow rate of the heavy phase and wherein said heavy phase sensor is provided in communication contact with said control system and wherein said control system is configured to control said at least one pressure control device in dependence of at least one value of the measured one or more properties measured by the light phase sensor and/or the heavy phase sensor.

In the embodiment of the invention said method further comprises controlling a flow rate of the contaminated oil into the disc stack centrifugal separator in dependence of at least one value of said measured one or more properties.

In one embodiment of the invention said step of measuring comprises measuring at least two or three properties in the light phase retrieved from the light phase outlet of the disc stack centrifugal separator, wherein said at least two or three properties comprise two or three or more of a density, a viscosity, an amount of heavy phase content and a flow rate of the light phase, wherein said step of controlling is dependent on at least two or three values of the measured at least two or three properties.

In the embodiment of the invention said step of controlling a backpressure comprises controlling a pressure control device provided in connection with the heavy phase outlet and/or a pressure control device provided in connection with the light phase outlet of the disc stack centrifugal separator.

In one embodiment of the invention the step of controlling a backpressure comprises controlling a backpressure provided to the light phase outlet to decrease and/or a backpressure provided to the heavy phase outlet to increase if a value of a measured density or viscosity of the retrieved light phase is increasing.

In one embodiment of the invention the oil purification system further comprises at least one pressure sensor which is provided in fluid connection with at least one of the light phase outlet or the heavy phase outlet, wherein said at least one pressure sensor is provided in communication contact with said control system and whereby said control system is configured to control said at least one pressure control device further in dependence on a reading from said at least one pressure sensor. Hereby a control of the backpressure can be provided with precision.

In one embodiment of the invention said oil purification system further comprises a contaminated oil tank comprising contaminated oil to be purified, wherein said contaminated oil tank comprises an outlet which is fluidly connected to an inlet of the disc stack centrifugal separator possibly via one or more further oil treatment units.

In one embodiment of the invention said at least one pressure control device is at least one control valve provided to a light phase fluid line connected to the light phase outlet and/or to a heavy phase fluid line connected to the heavy phase outlet.

### BRIEF DESCRIPTION OF THE DRAWINGS

Figure 1 shows schematically an oil purification system according to one embodiment of the invention.
Figure 2 is a flow chart of a method according to one embodiment of the invention.
Figure 3 shows schematically a cross section of a disc stack centrifugal separator.
Figure 4a shows a cross section of a top portion of a disc stack centrifugal separator comprising a gravity disc according to prior art. Figure 4b shows a cross section of a top portion of a disc stack centrifugal separator where no gravity disc is provided according to the invention.
Figure 5 shows schematically a heavy phase outlet chamber or a light phase outlet chamber of a disc stack centrifugal separator in which a fluid level can be controlled according to the invention.
Figure 6 is a diagram showing grade efficiency for a centrifuge depending on droplet sizes for three different flow rates.

### DETAILED DESCRIPTION OF THE EMBODIMENTS

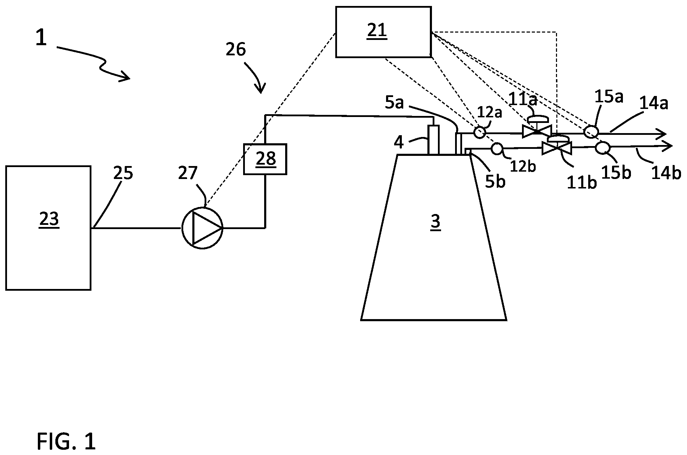

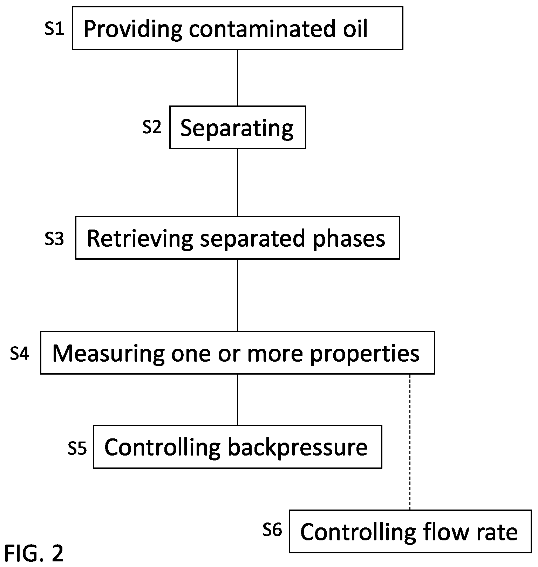

Figure 1 shows schematically an oil purification system 1 according to one embodiment of the invention. Figure 2 is a flow chart of a method according to one embodiment of the invention.

The oil purification system 1 comprises a disc stack centrifugal separator 3. The disc stack centrifugal separator 3 is schematically shown in Figure 1 to comprise an inlet 4 through which contaminated oil to be purified can be provided into the disc stack centrifugal separator 3. In Figure 1 a contaminated oil tank 23 is also schematically shown comprising an outlet 25 which is fluidly connected by at least one fluid connection 26 to the inlet 4 of the disc stack centrifugal separator 3. A pump 27 is also shown connected in the at least one fluid connection 26 for pumping the contaminated oil from the contaminated oil tank 23 to the inlet 4 of the disc stack centrifugal separator 3. In some embodiments of the invention other oil treatment units 28 can be provided in the at least one fluid connection 26 between the contaminated oil tank 23 and the disc stack centrifugal separator 3. These other oil treatment units 28 are only schematically shown as one unit. The other oil treatment units 28 can for example comprise one or more filters, one or more mixing units, a separation aid adding device, one or more buffer tank, one or more settling tanks or one or more further centrifugal separators.

The disc stack centrifugal separator 3 comprises furthermore a light phase outlet 5a and a heavy phase outlet 5b. The contaminated oil is separated in the disc stack centrifugal separator 3 into a light phase and a heavy phase whereby a light phase will be retrieved from the disc stack centrifugal separator 3 from the light phase outlet 5a and a heavy phase will be retrieved from the disc stack centrifugal separator from the heavy phase outlet 5b after the separation.

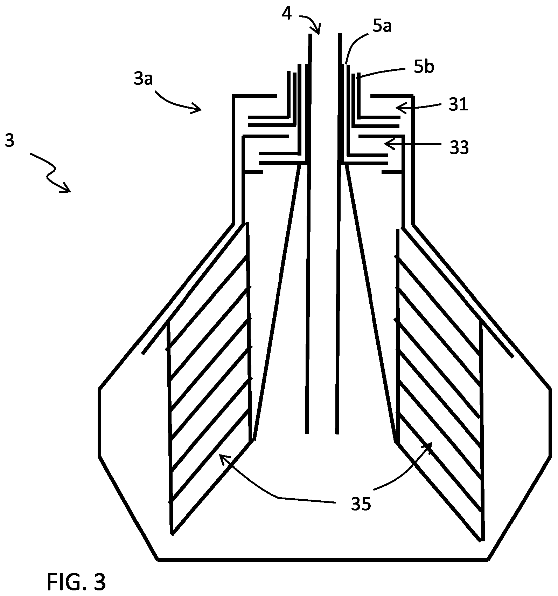

Figure 3 shows schematically a cross section of a disc stack centrifugal separator 3. This is only a schematic principal view for a disc stack centrifugal separator which can be used for the invention. An inlet 4, a light phase outlet 5a and a heavy phase outlet 5b are schematically shown in Figure 3. Furthermore, a heavy phase outlet chamber 31 in fluid connection with the heavy phase outlet 5b and a light phase outlet chamber 33 in fluid connection with the light phase outlet 5a are shown in a top part 3a of the centrifugal separator 3. A disc stack 35 is also schematically shown in the disc stack centrifugal separator whereby the heavy and light phases are separated in this disc stack according to what is well known for disc stack centrifugal separators.

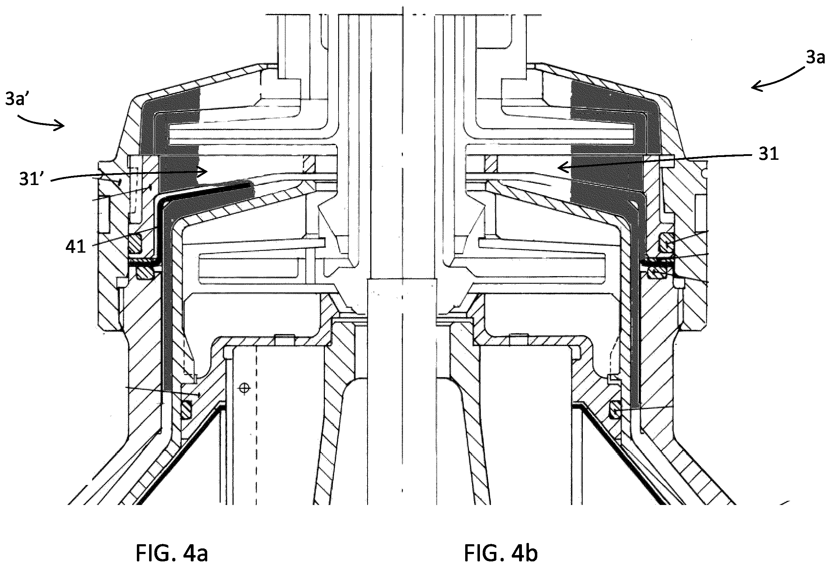

Usually when a disc stack centrifugal separator is used an interface between the oil (light phase) and water (heavy phase) in the disc stack 35 is fixedly set by providing a gravity disc to the heavy phase outlet chamber 31 (also called water paring chamber) and a level ring to the light phase outlet chamber 33 (also called oil paring chamber) of the disc stack centrifugal separator. In Figure 4a a top part 3a' of a disc stack centrifugal separator 3' which is not according to the invention but rather according to prior art is shown. In a heavy phase outlet chamber 31' of this prior art disc stack centrifugal separator 3' such a gravity disc 41 is provided. In Figure 4b a corresponding top part 3a of a disc stack centrifugal separator 3 according to the invention is shown. Here no gravity disc is provided in the heavy phase outlet chamber 31. Alternatively, a gravity disc could be provided in the heavy phase outlet chamber 31 also according to the invention but with a larger inner diameter for allowing a control of the fluid level in the heavy phase outlet chamber 31. Correspondingly a level ring (not shown) is usually provided in the light phase outlet chamber 33' of a prior art disc stack centrifugal separator 3' but according to the invention said level ring may be removed. According to the invention a disc stack centrifugal separator 3 is used comprising a heavy phase outlet chamber 31 and/or a light phase outlet chamber 33 in which a fluid level can be controlled. This can be achieved for example by removing a gravity disc and/or a level ring or by providing a gravity disc and/or a level ring with a comparatively large inner diameter. Hereby the heavy and/or light phase outlet chamber 31, 33 of the disc stack centrifugal separator will allow for a fluid level to be controlled to different positions. Hereby it is only necessary to provide one of the heavy phase outlet chamber 31 or the light phase outlet chamber 33 such that a fluid level can be controlled and hereby one of a gravity disc or a level ring could be kept in some embodiments of the invention.

In prior art disc stack centrifugal separators the gravity disc and/or the level ring has to be changed to another size if the position of the interface between light phase and heavy phase in the disc stack needs to be adjusted. This would be necessary if for example another type of oil having another density and/or viscosity should be treated. By changing a gravity disc or level ring to another one with different diameter the interface between light phase and heavy phase in the disc stack will be moved.

According to the invention a fluid level in the heavy phase outlet chamber 31 and/or the light phase outlet chamber 33 can be controlled and by this control the position of the interface between light phase and heavy phase in the disc stack 35 will also be moved. The fluid level can be controlled by providing a heavy phase outlet chamber and/or a light phase outlet chamber with an open inner room, i.e. for example without a limiting gravity disc or level ring. According to the invention the fluid level in the heavy phase outlet chamber 31 and/or light phase outlet chamber 33 is moved by controlling a back pressure provided to the heavy phase outlet 5b and/or the light phase outlet 5a of the centrifugal separator 3.

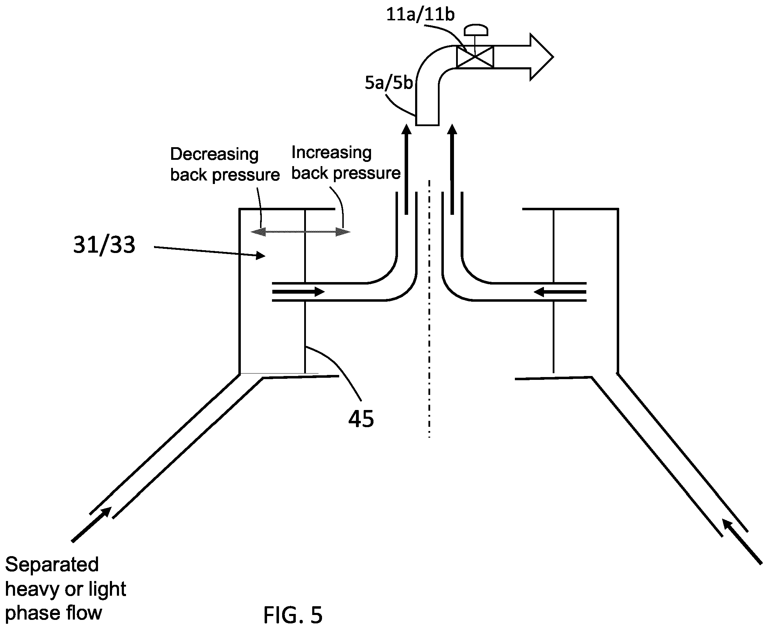

In Figure 5 it is schematically shown how a fluid level 45 in the heavy phase outlet chamber 31 or the light phase outlet chamber 33 can be moved. The chamber shown in Figure 5 can be any one of the heavy phase or light phase outlet chamber 31, 33. It is only a schematic view of how the fluid level 45 can move in relation to how the back pressure is controlled from a pressure control device 11a, 11b, for example a control valve 11a, 11b, which according to the invention is provided in fluid connection with one or both of the light phase outlet 5a and the heavy phase outlet 5b. The fluid level 45 will move to the left in Figure 5 if the back pressure provided to the heavy phase outlet 5b or the light phase outlet 5a decreases and the fluid level 45 will move to the right in Figure 5 if the back pressure provided to the heavy phase outlet 5b or the light phase outlet 5a increases. A movement of the fluid level 45 will also affect an interface between the heavy phase and the light phase within the disc stack 35 and hereby the position of the interface between the heavy phase and the light phase in the disc stack 35 can be controlled by controlling the pressure control device 11a, 11b. Hereby the separation efficiency can be optimized for different types of contaminated oils. The interface between the heavy phase and the light phase in the disc stack 35 should suitably be positioned somewhere between a position just outside a disc stack outer edge and a middle of distribution holes which are provided in the disc stack for distribution of the incoming feed. With such a location of the interface position the flow will be distributed evenly giving same flow rate between every disc in the disc stack. If the interface position is going too far outside the disc stack edge, oil will be lost into the water outlet. The so-called "water lock" is lost and oil is going out the wrong way unseparated. If the interface position is located from the middle of the distribution holes and inwards this will be acting as a flow restriction since most of the holes will have a water density level were the incoming oil feed is provided. This density difference creates an uneven distribution in the disc stack and consequently poor separability.

According to the invention a light phase outlet chamber 33 and/or a heavy phase outlet chamber 31 in which a fluid level can be controlled is provided in the disc stack centrifugal separator 3. Furthermore at least one pressure control device 11a, 11b is provided in fluid connection with at least one of a light phase outlet 5a of the disc stack centrifugal separator 3 and a heavy phase outlet 5b of the disc stack centrifugal separator 3. The pressure control device 11a, 11b can be for example a control valve 11a, 11b provided to a light phase fluid line 14a connected to the light phase outlet 5a and/or to a heavy phase fluid line 14b connected to the heavy phase outlet 5b. Hereby a level of backpressure provided to the light phase outlet 5a and/or the heavy phase outlet 5b can be controlled by controlling the at least one pressure control device 11a, 11b. Either only one of the heavy phase or light phase outlets 5a, 5b is controlled according to the invention and hereby provided with a pressure control device 11a, 11b or both of the heavy and light phase outlets 5a, 5b can be controlled. However, in order to control the interface position in the disc stack 35 only one of the heavy phase outlet 5b or the light phase outlet 5a has to be controlled by providing a controlled back pressure according to the invention. Hereby also only one of the heavy phase outlet chamber 31 and the light phase outlet chamber 33 needs to be a chamber in which a fluid level can be controlled. In Figure 1 it is however shown to be control valves 11a, 11b provided in connection with both the light phase outlet 5a and the heavy phase outlet 5b. One of them can therefore be omitted.

Further according to the invention at least one light phase sensor 15a is positioned in the oil purification system 1 for measuring one or more properties in the light phase retrieved from the light phase outlet 5a of the disc stack centrifugal separator 3. Said one or more properties comprises one or more of a density, a viscosity, an amount of heavy phase content and a flow rate of the light phase.

In some embodiments, but not necessarily the oil purification system 1 further comprises at least one heavy phase sensor 15b positioned in the oil purification system 1 for measuring one or more properties in the heavy phase retrieved from the heavy phase outlet 5b of the disc stack centrifugal separator 3. Said one or more properties comprise one or more of a density and a flow rate of the heavy phase.

The oil purification system 1 comprises furthermore a control system 21 which is provided in communication contact with the at least one light phase sensor 15a and with the heavy phase sensor 15b if such a sensor is provided. The control system 21 is further provided in communication contact with the at least one pressure control device 11a, 11b, wherein said pressure control device 11a, 11b can be controlled in dependence of at least one value of the measured one or more properties. The control device 21 is in communication connection with the at least one sensor 15a, 15b and with the at least one pressure control device 11a, 11b, i.e. a wireless or wired connection. The connections with the control system 21 are shown by dotted lines in Figure 1. Suitably at least one pressure sensor 12a, 12b is provided in fluid connection with at least one of the light phase outlet 5a or the heavy phase outlet 5b. In Figure 1 a light phase pressure sensor 12a is provided in connection with the light phase outlet 5a. The light phase pressure sensor 12a is here provided in the light phase fluid line 14a connected to the light phase fluid outlet 5a. Correspondingly a heavy phase pressure sensor 12b may be provided in connection with the heavy phase outlet 5b, for example provided in the heavy phase fluid line 14b which is connected to the heavy phase outlet 5b. However, only one of these two pressure sensors 14a, 14b would be needed for controlling a back pressure to only one of the heavy and light phase outlets 5a, 5b. The light phase pressure sensor 12a and/or the heavy phase pressure sensor 12b are also provided in connection with the control system 21 and hereby the control system 21 can control the at least one pressure control device 11a, 11b according to readings from this at least one pressure sensor 12a, 12b.

Said control system 21 may be configured to control the at least one pressure control device 11a, 11b such that the backpressure provided to the heavy phase outlet chamber 31 and/or light phase outlet chamber 33 is adjusted continuously or repeatedly at predefined intervals. Hereby the centrifugal separator 3 can be adopted for different conditions continuously or at repeated intervals. For example if the density or viscosity of the oil is shifting due to different types of oil components this shift is measured by the light phase sensor 15a and the backpressure provided to the heavy phase outlet 5b or the light phase outlet 5a can be controlled by a suitable and corresponding amount such that the fluid level 45 in the heavy phase outlet chamber 31 or the light phase outlet chamber 33 is moved a suitable distance whereby the position of the interface between heavy phase and light phase in the disc stack 35 will be moved a corresponding distance. The correlation between change in backpressure and movement of position of the interface in the disc stack needs to be calculated since it is depending on density differences heavy phase/light phase, viscosity, flow rate and heavy phase content.

The light phase separated in the disc stack centrifugal separator 3 in the oil purification system 1 according to the invention can be oil of different types. The heavy phase can for example be water, water comprising salt, such as brine or water with added mono ethylene glycol (MEG).

In Figure 2 a flow chart of a method for purification of contaminated oil according to one embodiment of the invention is shown. The method steps are described below:
S1: Providing contaminated oil into a disc stack centrifugal separator 3, wherein said disc stack centrifugal separator 3 comprises a light phase outlet chamber 33 and/or a heavy phase outlet chamber 31 in which a fluid level can be controlled.
S2: Separating the contaminated oil in the disc stack centrifugal separator 3 into a light phase and a heavy phase.
S3: Retrieving the separated light phase from a light phase outlet 5a of the disc stack centrifugal separator 3 and retrieving the separated heavy phase from a heavy phase outlet 5b of the disc stack centrifugal separator 3.
S4: Measuring one or more properties in the light phase retrieved from the light phase outlet 5a of the disc stack centrifugal separator 3, wherein said one or more properties comprise one or more of a density, a viscosity, an amount of heavy phase content and a flow rate of the light phase.
S5: Controlling a backpressure provided to the heavy phase outlet 5b and/or the light phase outlet 5a of the disc stack centrifugal separator 3 and hereby controlling a fluid level in the heavy phase outlet chamber 31 and/or light phase outlet chamber 33 and hereby adjusting an interface between the heavy phase and the light phase in a disc stack part 35 of the disc stack centrifugal separator 3, said controlling being dependent on at least one value of said one or more measured properties.

Said steps of measuring one or more properties, S4, and controlling a backpressure, S5, are performed continuously or repeatedly at predefined intervals during purification of oil.

The method may also comprise the step of measuring one or more properties in the heavy phase retrieved from the heavy phase outlet 5b of the disc stack centrifugal separator 3. However, this is optional. Said one or more properties comprise one or more of a density and a flow rate of the heavy phase. Wherein said step of controlling a backpressure, S5, further can be dependent on at least one value of said one or more properties measured in the heavy phase.

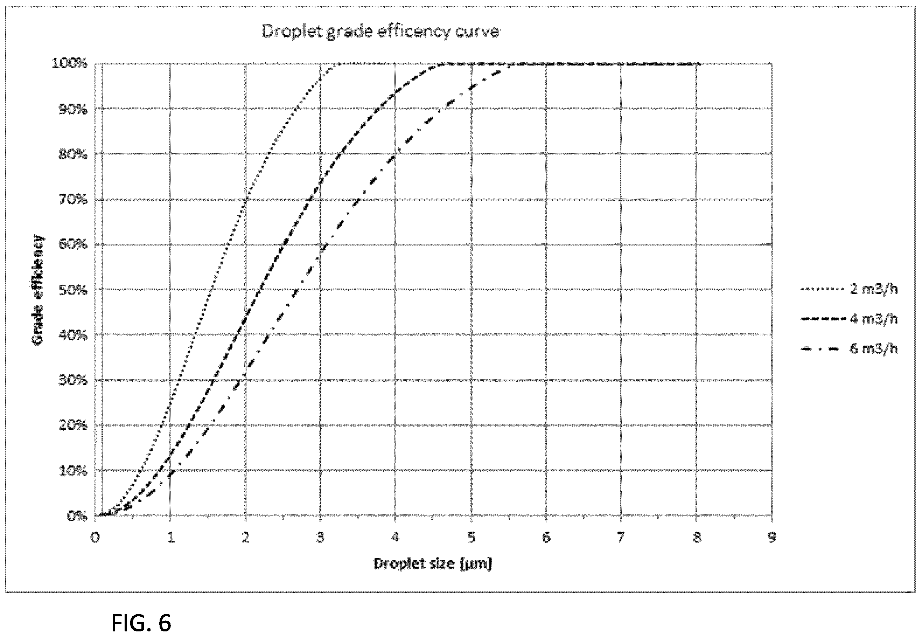

The method **also** comprises the step:
S6: Controlling a flow rate of the contaminated oil into the disc stack centrifugal separator 3 in dependence of at least one value of said measured one or more properties. For example, the pump 27 may be connected to the control system 21 and be controlled in dependence of a measured property. For example, if a level of heavy phase content in the light phase is measured to be above a predefined threshold even though a backpressure provided to the light phase outlet 5a and/or the heavy phase outlet 5b has been corrected accordingly the reason could for example be that there are too small droplets of heavy phase in the light phase. The centrifugal separator 3 is effective for removing droplets above a certain size but will not effectively remove smaller droplets. The droplet sizes which are effectively removed is dependent on the flow rate. With a higher flow rate through the centrifugal separator smaller droplets will not be separated. See the diagram in Figure 6 for a comparison between different flow rates. At a smaller flow rate the retention time for the fluid in the disc stack 35 of the centrifugal separator 3 will increase and hereby also smaller droplets of heavy phase will be better separated. Hereby, it may be suitable to lower the flow rate through the centrifugal separator if the heavy phase content in the light phase retrieved from the light phase outlet 5a of the centrifugal separator is above a certain threshold. The flow rate can be controlled by controlling the pump 27 which is provided in the oil purification system 1 for pumping contaminated oil into the centrifugal separator 3.

In some embodiments of the invention said step of measuring comprises measuring at least two or three properties in the light phase retrieved from the light phase outlet 5a of the disc stack centrifugal separator 3, wherein said at least two or three properties comprise two or three or more of a density, a viscosity, an amount of heavy phase content and a flow rate of the light phase, wherein said step of controlling is dependent on at least two or three values of the measured at least two or three properties. Hereby a combined assessment of different factors can be used for optimizing the separation efficiency of the centrifugal separator 3.

In some embodiments of the invention the step of controlling a backpressure, S5, comprises controlling a control valve 11b provided to the heavy phase outlet 5b and/or a control valve11a provided to the light phase outlet 5a of the disc stack centrifugal separator 3.

In some embodiments of the invention the step of controlling a backpressure, S5, comprises controlling a backpressure provided to the light phase outlet 5a to decrease and/or a backpressure provided to the heavy phase outlet 5b to increase if a value of a measured density or viscosity of the retrieved light phase is increasing. A density increase on the light phase will change the hydrostatic balance (position of the light phase/heavy phase interface inside the centrifuge disc stack area) and needs to be compensated by increasing the heavy phase outlet 5b backpressure and/or decreased pressure adjustment on the light phase outlet 5a and a density decrease will be the opposite to this. A viscosity increase will change the internal pressure drop through the disc stack and consequently move the heavy phase/light phase interface and needs to be compensated by increasing the heavy phase outlet backpressure and/or decreased pressure adjustment on the light phase outlet and a viscosity decrease will be the opposite to this. An increased heavy phase content in the incoming slop oil will increase internal pressure drop on the separated heavy phase side. This will move light phase/heavy phase interface inside the centrifuge disc stack area closer to the centre of rotation. This needs to be compensated by decreasing the heavy phase outlet backpressure and/or increased pressure adjustment on the light phase outlet and a decreased heavy phase content in the incoming slop oil will be the opposite to this.

## Claims

1. A method for purification of contaminated oil comprising the steps of:
- providing (S1) contaminated oil into a disc stack centrifugal separator (3) by pumping said contaminated oil from a contaminated oil tank (23) to the disc stack centrifugal separation (3) using a pump (27), wherein said disc stack centrifugal separator comprises a light phase outlet chamber (33) and/or a heavy phase outlet chamber (31) in which a fluid level can be controlled;
- separating (S2) the contaminated oil in the disc stack centrifugal separator (3) into a light phase and a heavy phase;
- retrieving (S3) the separated light phase from a light phase outlet (5a) of the disc stack centrifugal separator (3) and retrieving the separated heavy phase from a heavy phase outlet (5b) of the disc stack centrifugal separator (3);
- measuring (S4) with at least one light phase sensor (15a) one or more properties in the light phase retrieved from the light phase outlet (5a) of the disc stack centrifugal separator (3), wherein said one or more properties comprise one or more of a density, a viscosity, an amount of heavy phase content and a flow rate of the light phase;
- controlling (S5) by at least one pressure control device (11a, 11b) a backpressure provided to the heavy phase outlet (5b) and/or the light phase outlet (5a) of the disc stack centrifugal separator (3) and hereby controlling a fluid level in the heavy phase outlet chamber (31) and/or light phase outlet chamber (33), said controlling being dependent on at least one value of said one or more measured properties; and
- controlling (S6) a flow rate of the contaminated oil into the disc stack centrifugal separator (3) in dependence of at least one value of said measured one or more properties.

2. Method according to claim 1, wherein said steps of measuring (S4) one or more properties and controlling a backpressure are performed continuously or repeatedly at predefined intervals during purification of contaminated oil.

3. Method according to claim 1 or 2, further comprising the step of measuring one or more properties in the heavy phase retrieved from the heavy phase outlet (5b) of the disc stack centrifugal separator (3), wherein said one or more properties comprise one or more of a density and a flow rate of the heavy phase.

4. Method according to any one of the preceding claims, wherein said step of measuring (S4) comprises measuring at least two or three properties in the light phase retrieved from the light phase outlet (5a) of the disc stack centrifugal separator (3), wherein said at least two or three properties comprise two or three or more of a density, a viscosity, an amount of heavy phase content and a flow rate of the light phase, wherein said step of controlling is dependent on at least two or three values of the measured at least two or three properties.

5. Method according to any one of the preceding claims, wherein said step of controlling (S5) a backpressure comprises controlling a pressure control device (11b) provided in connection with the heavy phase outlet (5b) and/or a pressure control device (11a) provided in connection with the light phase outlet (5a) of the disc stack centrifugal separator (3).

6. Method according to any one of the preceding claims, wherein the step of controlling (S5) a backpressure comprises controlling a backpressure provided to the light phase outlet (5a) to decrease and/or a backpressure provided to the heavy phase outlet (5b) to increase if a value of a measured density or viscosity of the retrieved light phase is increasing.

7. An oil purification system comprising:
- a disc stack centrifugal separator (3), wherein said disc stack centrifugal separator comprises a light phase outlet chamber (33) and/or a heavy phase outlet chamber (31) in which a fluid level can be controlled;
- at least one pressure control device (11a, 11b) provided to at least one of a light phase outlet (5a) of the disc stack centrifugal separator (3) and a heavy phase outlet (5b) of the disc stack centrifugal separator (3), whereby a level of backpressure provided to the light phase outlet (5a) and/or the heavy phase outlet (5b) can be controlled by controlling the at least one pressure control device (11a, 11b);
- at least one light phase sensor (15a) positioned in the oil purification system (1) for measuring one or more properties in the light phase retrieved from the light phase outlet (5a) of the disc stack centrifugal separator (3), wherein said one or more properties comprises one or more of a density, a viscosity, an amount of heavy phase content and a flow rate of the light phase;
- a pump (27) for pumping contaminated oil from a contaminated oil tank (23) to an inlet (4) of the disc stack centrifugal separator; and
- a control system (21) which is provided in communication contact with the at least one light phase sensor (15a) and with the at least one pressure control device (11a, 11b), wherein said control system (21) is configured to control the at least one pressure control device (11a, 11b) in dependence of at least one value of the measured one or more properties, said control system (21) further being connected to said pump (27) and is configured to control the pump (27) to control a flow rate of the contaminated oil into the disc stack centrifugal separator (3) in dependence of at least one value of said measured one or more properties.

8. Oil purification system according to claim 7, wherein said control system is configured to control the at least one pressure control device (11a, 11b) such that the backpressure provided to the heavy phase outlet chamber (31) and/or light phase outlet chamber (33) is adjusted continuously or repeatedly at predefined intervals.

9. Oil purification system according to claim 7 or 8, further comprising at least one heavy phase sensor (15b) positioned in the oil purification system (1) for measuring one or more properties in the heavy phase retrieved from the heavy phase outlet (5b) of the disc stack centrifugal separator (3), wherein said one or more properties comprise one or more of a density and a flow rate of the heavy phase and wherein said heavy phase sensor (15b) is provided in communication contact with said control system (21) and wherein said control system is configured to control said at least one pressure control device (11a, 11b) in dependence of at least one value of the measured one or more properties measured by the light phase sensor (15a) and/or the heavy phase sensor (15b).

10. Oil purification system according to any one of the claims 7-9, further comprising at least one pressure sensor (12a, 12b) which is provided in fluid connection with at least one of the light phase outlet (5a) or the heavy phase outlet (5b), wherein said at least one pressure sensor (12a, 12b) is provided in communication contact with said control system (21) and whereby said control system (21) is configured to control said at least one pressure control device (11a, 11b) further in dependence on a reading from said at least one pressure sensor (12a, 12b).

11. Oil purification system according to any one of the claims 7-10, wherein said at least one pressure control device (11a, 11b) is at least one control valve provided to a light phase fluid line (14a) connected to the light phase outlet (5a) and/or to a heavy phase fluid line (14b) connected to the heavy phase outlet (5b).

## Patentansprüche

1. Verfahren zur Reinigung von verunreinigtem Öl, umfassend die Schritte:
- Zuführen (S1) von verunreinigtem Öl in einen Scheibenstapel-Zentrifugalseparator (3) durch Pumpen des verunreinigten Öls von einem verunreinigten Öltank (23) zu der Scheibenstapel-Zentrifugalseparation (3) unter Verwendung einer Pumpe (27), wobei der Scheibenstapel-Zentrifugalseparator eine Leichte-Phase-Auslasskammer (33) und/oder eine Schwere-Phase-Auslasskammer (31), in der ein Fluidpegel gesteuert werden kann, umfasst;
- Auftrennen (S2) des verunreinigten Öls in dem Scheibenstapel-Zentrifugalseparator (3) in eine leichte Phase und eine schwere Phase;
- Entnehmen (S3) der abgetrennten leichten Phase aus einem Leichte-Phase-Auslass (5a) des Scheibenstapel-Zentrifugalseparators (3) und Entnehmen der abgetrennten schweren Phase aus einem Schwere-Phase-Auslass (5b) des Scheibenstapel-Zentrifugalseparators (3);
- mit wenigstens einem Leichte-Phase-Sensor (15a) Messen (S4) einer oder mehrerer Eigenschaften in der aus dem Leichte-Phase-Auslass (5a) des Scheibenstapel-Zentrifugalseparators (3) entnommenen leichten Phase, wobei die eine oder mehreren Eigenschaften eines oder mehrere von einer Dichte, einer Viskosität, einer Menge an Schwere-Phase-Gehalt und einer Flussrate der leichten Phase umfassen;
- Steuern (S5) eines Gegendrucks, der dem Schwere-Phase-Auslass (5b) und/oder dem Leichte-Phase-Auslass (5a) des Scheibenstapel-Zentrifugalseparators (3) bereitgestellt wird, durch wenigstens eine Drucksteuervorrichtung (11a, 11b) und dadurch Steuern eines Fluidniveaus in der Schwere-Phase-Auslasskammer (31) und/oder der Leichte-Phase-Auslasskammer (33), wobei das Steuern von wenigstens einem Wert der einen oder der mehreren gemessenen Eigenschaften abhängt; und
- Steuern (S6) einer Flussrate des verunreinigten Öls in den Scheibenstapel-Zentrifugalseparator (3) abhängig von wenigstens einem Wert der gemessenen einen oder mehreren Eigenschaften.

2. Verfahren nach Anspruch 1, wobei die Schritte des Messens (S4) einer oder mehrerer Eigenschaften und des Steuerns eines Gegendrucks kontinuierlich oder wiederholt in vorgegebenen Intervallen während der Reinigung von verunreinigtem Öl durchgeführt werden.

3. Verfahren nach Anspruch 1 oder 2, ferner umfassend den Schritt des Messens einer oder mehrerer Eigenschaften in der aus dem Schwere-Phase-Auslass (5b) des Scheibenstapel-Zentrifugalseparators (3) entnommenen schweren Phase, wobei die eine oder mehreren Eigenschaften eines oder mehrere von einer Dichte und einer Flussrate der schweren Phase umfassen.

4. Verfahren nach einem der vorstehenden Ansprüche, wobei der Schritt des Messens (S4) Messen von wenigstens zwei oder drei Eigenschaften in der aus dem Leichte-Phase-Auslass (5a) des Scheibenstapel-Zentrifugalseparators (3) entnommenen leichten Phase umfasst, wobei die wenigstens zwei oder drei Eigenschaften zwei oder drei oder mehr von einer Dichte, einer Viskosität, einer Menge an Schwere-Phase-Gehalt und einer Flussrate der leichten Phase umfassen, wobei der Schritt des Steuerns von wenigstens zwei oder drei Werten der gemessenen wenigstens zwei oder drei Eigenschaften abhängt.

5. Verfahren nach einem der vorstehenden Ansprüche, wobei der Schritt des Steuerns (S5) eines Gegendrucks Steuern einer Drucksteuervorrichtung (11b), die in Verbindung mit dem Schwere-Phase-Auslass (5b) bereitgestellt ist, und/oder einer Drucksteuervorrichtung (11a), die in Verbindung mit dem Leichte-Phase-Auslass (5a) des Scheibenstapel-Zentrifugalseparators (3) bereitgestellt ist, umfasst.

6. Verfahren nach einem der vorstehenden Ansprüche, wobei der Schritt des Steuerns (S5) eines Gegendrucks Steuern eines Gegendrucks, der dem Leichte-Phase-Auslass (5a) bereitgestellt wird, zum Verringern und/oder eines Gegendrucks, der dem Schwere-Phase-Auslass (5b) bereitgestellt wird, zum Erhöhen umfasst, wenn ein Wert einer gemessenen Dichte oder Viskosität der entnommenen leichten Phase zunimmt.

7. Ölreinigungssystem umfassend:
- einen Scheibenstapel-Zentrifugalseparator (3), wobei der Scheibenstapel-Zentrifugalseparator eine Leichte-Phase-Auslasskammer (33) und/oder eine Schwere-Phase-Auslasskammer (31), in der ein Fluidpegel gesteuert werden kann, umfasst;
- wenigstens eine Druckregelvorrichtung (11a, 11b), die an wenigstens einem von einem Leichte-Phase-Auslass (5a) des Scheibenstapel-Zentrifugalseparators (3) und einem Schwere-Phase-Auslass (5b) des Scheibenstapel-Zentrifugalseparators (3) bereitgestellt ist, wobei ein dem Leichte-Phase-Auslass (5a) und/oder dem Schwere-Phase-Auslass (5b) bereitgestelltes Gegendruckniveau durch Steuern der wenigstens einen Druckregelvorrichtung (11a, 11b) steuerbar ist;
- wenigstens einen Leichte-Phase-Sensor (15a), der in dem Ölreinigungssystem (1) angeordnet ist, zum Messen einer oder mehrerer Eigenschaften in der aus dem Leichte-Phase-Auslass (5a) des Scheibenstapel-Zentrifugalseparators (3) entnommenen leichten Phase, wobei die eine oder mehreren Eigenschaften eines oder mehrere von einer Dichte, einer Viskosität, einer Menge an Schwere-Phase-Gehalt und einer Flussrate der leichten Phase umfassen;
- eine Pumpe (27) zum Pumpen von verunreinigtem Öl aus einem verunreinigten Öltank (23) zu einem Einlass (4) des Scheibenstapel-Zentrifugalseparators; und
- ein Steuersystem (21), das in Kommunikationsverbindung mit dem wenigstens einen Leichte-Phase-Sensor (15a) und mit der wenigstens einen Drucksteuervorrichtung (11a, 11b) bereitgestellt ist, wobei das Steuersystem (21) dafür gestaltet ist, die wenigstens eine Drucksteuervorrichtung (11a, 11b) abhängig von wenigstens einem Wert der gemessenen einen oder mehreren Eigenschaften zu steuern, wobei das Steuersystem (21) ferner mit der Pumpe (27) verbunden ist und dafür gestaltet ist, die Pumpe (27) zu steuern, um eine Flussrate des verunreinigten Öls in den Scheibenstapel-Zentrifugalseparator (3) abhängig von wenigstens einem Wert der gemessenen einen oder mehreren Eigenschaften zu steuern.

8. Ölreinigungssystem nach Anspruch 7, wobei das Steuersystem dafür gestaltet ist, die wenigstens eine Drucksteuervorrichtung (11a, 11b) so zu steuern, dass der Gegendruck, der der Schwere-Phase-Auslasskammer (31) und/oder der Leichte-Phase-Auslasskammer (33) bereitgestellt wird, kontinuierlich oder wiederholt in vorgegebenen Intervallen eingestellt wird.

9. Ölreinigungssystem nach Anspruch 7 oder 8, ferner umfassend wenigstens einen Schwere-Phase-Sensor (15b), der in dem Ölreinigungssystem (1) angeordnet ist, um eine oder mehrere Eigenschaften in der aus dem Schwere-Phase-Auslass (5b) des Scheibenstapel-Zentrifugalseparators (3) entnommenen schweren Phase zu messen, wobei die eine oder mehreren Eigenschaften eines oder mehrere von einer Dichte und einer Flussrate der schweren Phase umfassen und wobei der Schwere-Phase-Sensor (15b) in Kommunikationsverbindung mit dem Steuersystem (21) bereitgestellt ist und wobei das Steuersystem dafür gestaltet ist, die wenigstens eine Drucksteuervorrichtung (11a, 11b) abhängig von wenigstens einem Wert der gemessenen einen oder mehreren Eigenschaften, die von dem Leichte-Phase-Sensor (15a) und/oder dem Schwere-Phase-Sensor (15b) gemessen werden, zu steuern.

10. Ölreinigungssystem nach einem der Ansprüche 7-9, ferner umfassend wenigstens einen Drucksensor (12a, 12b), der in Fluidverbindung mit dem Leichte-Phase-Auslass (5a) und/oder dem Schwere-Phase-Auslass (5b) bereitgestellt ist, wobei der wenigstens eine Drucksensor (12a, 12b) in Kommunikationsverbindung mit dem Steuersystem (21) bereitgestellt ist und wobei das Steuersystem (21) dafür gestaltet ist, die wenigstens eine Drucksteuervorrichtung (11a, 11b) abhängig von einem Messwert des wenigstens einen Drucksensors (12a, 12b) zu steuern.

11. Ölreinigungssystem nach einem der Ansprüche 7-10, wobei die wenigstens eine Drucksteuervorrichtung (11a, 11b) wenigstens ein Steuerventil ist, das an eine Leichte-Phase-Fluidleitung (14a), die mit dem Leichte-Phase-Auslass (5a) verbunden ist, und/oder an eine Schwere-Phase-Fluidleitung (14b), die mit dem Schwere-Phase-Auslass (5b) verbunden ist, bereitgestellt ist.

## Revendications

1. Procédé de purification d'huile contaminée comprenant les étapes suivantes :
- introduction (S1) d'huile contaminée à l'intérieur d'un séparateur centrifuge à empilement de disques (3) par pompage de ladite huile contaminée depuis une cuve d'huile contaminée (23) jusqu'à la séparation centrifuge à empilement de disques (3) au moyen d'une pompe (27), ledit séparateur centrifuge à empilement de disques comprenant une chambre de sortie de phase légère (33) et/ou une chambre de sortie de phase lourde (31) dans lesquelles un niveau de fluide peut être régulé ;
- séparation (S2) de l'huile contaminée dans le séparateur centrifuge à empilement de disques (3) en une phase légère et une phase lourde ;
- récupération (S3) de la phase légère séparée depuis une sortie de phase légère (5a) du séparateur centrifuge à empilement de disques (3) et récupération de la phase lourde séparée depuis une sortie de phase lourde (5b) du séparateur centrifuge à empilement de disques (3) ;
- mesure (S4), avec au moins un capteur de phase légère (15a), d'une ou plusieurs propriétés dans la phase légère récupérée depuis la sortie de phase légère (5a) du séparateur centrifuge à empilement de disques (3), ladite ou lesdites propriétés comprenant une masse volumique et/ou une viscosité et/ou une quantité de phase lourde et/ou un débit de la phase légère ;
- régulation (S5), par au moins un dispositif de régulation de pression (11a, 11b), d'une contre-pression appliquée à la sortie de phase lourde (5b) et/ou la sortie de phase légère (5a) du séparateur centrifuge à empilement de disques (3), et par ce moyen régulation d'un niveau de fluide dans la chambre de sortie de phase lourde (31) et/ou la chambre de sortie de phase légère (33), ladite régulation dépendant d'au moins une valeur de ladite ou desdites propriétés mesurées ; et
- régulation (S6) d'un débit de l'huile contaminée à l'intérieur du séparateur centrifuge à empilement de disques (3) en fonction d'au moins une valeur de ladite ou desdites propriétés mesurées.

2. Procédé selon la revendication 1, dans lequel lesdites étapes de mesure (S4) d'une ou plusieurs propriétés et régulation d'une contre-pression sont effectuées de façon continue ou répétée à des intervalles prédéfinis pendant la purification d'huile contaminée.

3. Procédé selon la revendication 1 ou 2, comprenant en outre l'étape de mesure d'une ou plusieurs propriétés dans la phase lourde récupérée depuis la sortie de phase lourde (5b) du séparateur centrifuge à empilement de disques (3), ladite ou lesdites propriétés comprenant une masse volumique et/ou un débit de la phase lourde.

4. Procédé selon l'une quelconque des revendications précédentes, dans lequel ladite étape de mesure (S4) comprend la mesure d'au moins deux ou trois propriétés dans la phase légère récupérée depuis la sortie de phase légère (5a) du séparateur centrifuge à empilement de disques (3), dans lequel lesdites au moins deux ou trois propriétés comprennent deux ou trois propriétés ou plus parmi une masse volumique, une viscosité, une quantité de phase lourde et un débit de la phase légère, dans lequel ladite étape de régulation dépend d'au moins deux ou trois valeurs des au moins deux ou trois propriétés mesurées.

5. Procédé selon l'une quelconque des revendications précédentes, dans lequel ladite étape de régulation (S5) d'une contre-pression comprend le contrôle d'un dispositif de régulation de pression (11b) raccordé à la sortie de phase lourde (5b) et/ou d'un dispositif de régulation de pression (11a) raccordé à la sortie de phase légère (5a) du séparateur centrifuge à empilement de disques (3).

6. Procédé selon l'une quelconque des revendications précédentes, dans lequel l'étape de régulation (S5) d'une contre-pression comprend la régulation d'une contre-pression appliquée à la sortie de phase légère (5a) pour qu'elle diminue et/ou d'une contre-pression appliquée à la sortie de phase lourde (5b) pour qu'elle augmente si une valeur d'une masse volumique ou viscosité mesurée de la phase légère récupérée est en train d'augmenter.

7. Système de purification d'huile comprenant :
- un séparateur centrifuge à empilement de disques (3), ledit séparateur centrifuge à empilement de disques comprenant une chambre de sortie de phase légère (33) et/ou une chambre de sortie de phase lourde (31) dans lesquelles un niveau de fluide peut être régulé ;
- au moins un dispositif de régulation de pression (11a, 11b) équipant une sortie de phase légère (5a) du séparateur centrifuge à empilement de disques (3) et/ou une sortie de phase lourde (5b) du séparateur centrifuge à empilement de disques (3), moyennant quoi un niveau de contre-pression appliquée à la sortie de phase légère (5a) et/ou la sortie de phase lourde (5b) peut être régulé par contrôle de l'au moins un dispositif de régulation de pression (11a, 11b) ;
- au moins un capteur de phase légère (15a) positionné dans le système de purification d'huile (1) pour mesurer une ou plusieurs propriétés dans la phase légère récupérée depuis la sortie de phase légère (5a) du séparateur centrifuge à empilement de disques (3), ladite ou lesdites propriétés comprenant une masse volumique et/ou une viscosité et/ou une quantité de phase lourde et/ou un débit de la phase légère ;
- une pompe (27) destinée à pomper de l'huile contaminée depuis une cuve d'huile contaminée (23) jusqu'à une entrée (4) du séparateur centrifuge à empilement de disques ; et
- un système de contrôle (21) qui est mis en contact de communication avec l'au moins un capteur de phase légère (15a) et avec l'au moins un dispositif de régulation de pression (11a, 11b), ledit système de contrôle (21) étant conçu pour contrôler l'au moins un dispositif de régulation de pression (11a, 11b) en fonction d'au moins une valeur de la ou des propriétés mesurées, ledit système de contrôle (21) étant en outre raccordé à ladite pompe (27) et étant conçu pour contrôler la pompe (27) afin de réguler un débit de l'huile contaminée à l'intérieur du séparateur centrifuge à empilement de disques (3) en fonction **d'au** moins une valeur de ladite ou desdites propriétés mesurées.

8. Système de purification d'huile selon la revendication 7, dans lequel ledit système de contrôle est conçu pour contrôler l'au moins un dispositif de régulation de pression (11a, 11b) de telle sorte que la contre-pression appliquée à la chambre de sortie de phase lourde (31) et/ou la chambre de sortie de phase légère (33) est réglée de façon continue ou répétée à des intervalles prédéfinis.

9. Système de purification d'huile selon la revendication 7 ou 8, comprenant en outre au moins un capteur de phase lourde (15b) positionné dans le système de purification d'huile (1) pour mesurer une ou plusieurs propriétés dans la phase lourde récupérée depuis la sortie de phase lourde (5b) du séparateur centrifuge à empilement de disques (3), dans lequel ladite ou lesdites propriétés comprennent une masse volumique et/ou un débit de la phase lourde et dans lequel ledit capteur de phase lourde (15b) est mis en contact de communication avec ledit système de contrôle (21), et dans lequel ledit système de contrôle est conçu pour contrôler ledit au moins un dispositif de régulation de pression (11a, 11b) en fonction d'au moins une valeur de la ou des propriétés mesurées par le capteur de phase légère (15a) et/ou le capteur de phase lourde (15b).

10. Système de purification d'huile selon l'une quelconque des revendications 7 à 9, comprenant en outre au moins un capteur de pression (12a, 12b) qui est raccordé fluidiquement à la sortie de phase légère (5a) et/ou la sortie de phase lourde (5b), dans lequel ledit au moins un capteur de pression (12a, 12b) est mis en contact de communication avec ledit système de contrôle (21), et moyennant quoi ledit système de contrôle (21) est conçu pour contrôler ledit au moins un dispositif de régulation de pression (11a, 11b) également en fonction d'une lecture issue dudit au moins un capteur de pression (12a, 12b).

11. Système de purification d'huile selon l'une quelconque des revendications 7 à 10, dans lequel ledit au moins un dispositif de régulation de pression (11a, 11b) est au moins une vanne de régulation équipant une conduite de fluide de phase légère (14a) raccordée à la sortie de phase légère (5a) et/ou une conduite de fluide de phase lourde (14b) raccordée à la sortie de phase lourde (5b).
